# EUROPEAN PATENT APPLICATION

(11) **EP 0 634 487 A2**
(43) Date of publication of application: **18.01.1995**
(21) Application number: 94107733.1
(22) Date of filing: 19.05.1994
(51) Int. Cl.: C12H 1/04, C12H 1/06

(54) **Beer fining method and agents**

(30) Priority: 21.05.1993 US 65843
(71) Applicant: RHONE-POULENC INC., Monmouth Junction, New Jersey 08852 (US)
(72) Inventor: Foley,Timothy W, Chicago, Ill. 60634 (US); Hayes,Steven, Chicago, Ill. 60657 (US)
(74) Representative: Patentanwälte Ruff, Beier, Schöndorf und Mütschele

(57) **Abstract**

A method of removing fines from beer comprises adding to the beer an aqueous solution containing gellan gum and gelatin. A dry blend of gellan gum and gelatin suitable for use as a fining agent to prepare the aqueous solution also is disclosed.

## Description

The present invention relates generally to the beverage industry. More particularly, it relates to a method and agents for removing particulate protein material commonly referred to as "fines" from malt beverages or wines.

Fining agents are materials which are added to beverages, such as malt beverages and wines, to clarify the beverages and/or to ease the filtration of the beverage by precipation of proteins and other insoluble materials.

In the brewing of beer, malt and unmalted adjuncts are extracted with water at suitable temperatures for a proper length of time to obtain a solution called wort. The wort is boiled and passed through some type of strainer (for example, a filter, hop-back, whirlpool) in order to remove solids (or trub). The wort is then cooled for fermentation (for example; a temperature of 47°F may be used for yeast addition). The cooled wort is then pitched with the proper amount of yeast. After the first 24 hours the fermentation is established and proceeds at an accelerated rate. The temperature of the fermenting wort increases and must thus be controlled to maintain yeast viability. Once the yeast has utilized the fermentable substances in the wort (usually after 7 to 10 days), the temperature is reduced and the yeast begins to settle. The yeast which has settled out during fermentation and cooling (in most cases) is then recovered in order to be used for pitching subsequent brews. During the most active phase of wort fermentation large volumes of carbon dioxide (CO₂) gas are liberated. Many breweries have CO₂ collection systems which collect, purify, and compress the gas for later use in beer carbonation.

The resultant "green" beer ("ruh" beer or fermented wort) is pumped into a "ruh" or storage tank where its temperature is further reduced (about 36°F or below). At this time, during beer transfer, the addition of fining agents (such as isinglass, gelatin, etc.) are made in order to shorten the processing time. During this initial storage (ruh) period proteinaceous materials, yeast, and other solids are precipitated. Precipitation is enhanced by the presence of fining agents. This initial time period may vary depending on several factors which may include: type of beer, dosing rates and effectiveness of fining agents (if any are employed), solids level in the beer, and brewery output and beer demand. The "ruh" beer can subsequently be transferred to maturation (conditioning) tanks where upon further settling of remaining yeast and solids may occur, or it may be kept in the same "ruh" tank for maturation. The maturation time varies widely from a few days to 3 months, depending on the brewery process employed.

Upon complete maturation, the beer is filtered. In some breweries it undergoes a single pass filtration while in others it goes through a double or two pass filtration system. The two pass system is broken up into a primary (coarse) filtration and a polish filtration. Foam stabilisers or foam aids (such as propylene glycol alginate at 20 to 80 ppm or gellan gum at 5 to 400 ppm) are added to the beer line after the primary filtration or just before final filtration. The filtered beer is then stored in a finishing tank. Prior to packaging, the product is normally carbonated. The finished beer product is packaged in either a pasteurized or unpasteurized form. The pasteurized forms most often include bottles and cans, while kegs and some bottles are unpasteurised. Upon further processing of the packaged product (labelers, packers, etc.) the beer is ready for shipping.

The standard fining agent of the brewing industry is isinglass, a collagen based product derived from the swim bladders of certain fish. Although it is considered to be the best fining agent for the brewing industry, isinglass does possess some disadvantages. In addition to being expensive, it also can be difficult to use because it requires an extended time, usually overnight, to prepare the solution and because it is a product derived from nature there may be a relatively high degree of variation in product consistency and quality.

The most common fining agent used in place of isinglass is gelatin. Gelatin does not require the extended overnight preparation time that isinglass does and gelatin is much cheaper. The fining action of gelatin is considered to be less effective than that of isinglass, given the same storage times and dose levels.

Obviously, it would be advantageous to have a fining agent that was comparable in action to isinglass but without its disadvantages (high cost, questionable availability, differences between batches, and preparation time).

It is an object of the present invention to disclose a method of fining beverages, such as beer, which does not require the use of isinglass.

It is also an object to disclose novel fining agents for use in the method of the present invention.

We have discovered that the addition of certain blends of gellan gum and gelatin as fining agents to ruh beer before the primary filtration provides results comparable to those obtained with isinglass.

In the method of the present invention, an effective amount of an aqueous solution prepared from a blend of gellan gum and gelatin is added to ruh beer before the yeast has been removed by primary filtration and it is kept in contact with the beer for at least about 24 hours to precipitate fines, including undesirable proteins, protein complexes, yeast and other suspended and insoluble material. The contact time is usually about 5 to 7 days. However, it can be much longer (e.g. 300 hours) without producing any negative effects on the beer. The ruh beer is then decanted and/or subjected to primary filtration.

The preferred blend for use as a fining agent for beer comprises about 2.5 to about 50% gellan gum, about 45 to about 95% of gelatin and an effective amount of a sequestering agent to bind any metallic ions that might interfere with the desired action of the other two ingredients.

The amount of the solution to be added to the ruh beer, is an amount which results in a gellan gum level in the ruh beer of about 0.25 ppm to about 60 ppm and a gelatin level of about 4.5 ppm to about 115 ppm.

The achievement of the foregoing objects and other objects and advantages by the practice of the present invention will be evident to those skilled in the art from the description and examples herein.

### Description of the Preferred Embodiment

In the preferred embodiment of the invention, a fining agent comprising a blend containing by weight about 8% of a gellan gum, about 72% of gelatin and about 20% of sodium citrate, a sequestering agent, is prepared by dry blending. The blend is then slowly added to water at a temperature of 35°C to 40°C with continuous mixing until the solids are completely solubilized (about 15-20 minutes). The resulting solution has a pH in the range of about 4 to about 8 for a 1.0% solution. For best results, the thus prepared solution is used within 24 hours if kept at room temperature or one hour if refrigerated to prevent gelling.

The above described solution of the fining agent is injected, with mixing, into a ruh beer that is to be stored prior to primary filtration. The solution of the fining agent is added to obtain a concentration of about 10 ppm to 120 ppm of the total blend in the ruh beer, and preferably about 20 ppm to about 60 ppm (i.e., about 0.5 to about 1.5 lb/100 barrels of ruh beer or about 0.2 to 0.6 grams/hectoliter) for most ruh beers. The concentration of the gellan gum is about 0.25 ppm to about 60 ppm, and preferably about 1.6 ppm to about 4.8 ppm (i.e., about 0.04 to about 0.12 lbs./100 barrels of ruh beer or about 0.008 to 0.024 grams/hectoliter) for most ruh beer. The concentration of gelatin is about 4.5 to about 115 ppm, and preferably about 14.4 ppm to about 43.2 ppm (i.e. about 0.37 to about 1.12 lb/100 barrels of ruh beer or about 0.14 to about 0.43 grams/hectoliter) for most ruh beers. However, the concentrations and the contact time can vary from brew to brew, protein and solids concentration of the beer being treated, and depending upon the ruh tank design.

Upon completion of the contact period, which can be from about 48 hours to over about 216 hours, the ruh beer is decanted and/or filtered. If desired, foaming agents and/or chillproofing agents and/or hop extracts and/or other processing aids or additives are then added, the beer is polish or final filtered and then packaged in a conventional manner.

The gellan gum is a polysaccharide which is produced by the fermentation of Psuedomonas elodea. It has good stability over a wide range of pH (3.5 to 8.0). As a product of a controlled fermentation the supply of gellan gum is reliable and the gum is of consistent high quality. Furthermore, gellan gum solutions can be prepared quickly as opposed to isinglass solutions.

The gelatin which is used in the practice of the present invention is a mixture of proteins derived from animal collagen by boiling in water. A preferred gelatin is a cold water insoluble gelatin having a bloom strength of 250.

The sequestering agent which is preferred for use in the blends of the present invention is sodium citrate because it assists the dispersion of the blends, in addition, to combining with metallic ions. However, other sequestering agents such as tetrasodium pyrophosphate, also can be used. The sequestering agent should be employed in an amount which is effective to combine with any metallic ions in the ruh beer that might otherwise interfere with the beneficial effects of the gellan gum and gelatin.

The preferred blends in which the gellan gum concentration by weight is from about 2.5% to about 50% and the gelatin concentration by weight is from about 45% to about 95% of the total blend appear to have a synergistic effect.

The practice of the present invention is further illustrated by the following examples:

### EXAMPLES

The general procedure used to evaluate the fining action of the blends of the present invention in beer was as follows:
1. 7 oz. clear glass beer bottles were filled with a ruh beer (with yeast still in suspension).
2. A solution of the finings product was prepared.
3. The appropriate volume of finings was injected into the 7 oz. beer bottle (usually to provide between 20 and 40 parts per million final concentration of finings in beer).
4. The beer bottle was then capped, inverted several times and stored at 3-4°C.
5. Turbidities of the beer were read in a Formazin Turbidity Unit (F.T.U.) meter on a daily basis.

Tables 1 to 11 show the results of the tests on various beers, Tables 2, 3, and 12 show the synergistic effect of the blends of the present invention, Table 13 lists the various ratios of the ingredients of the blends used in the various tests and Table 14 lists the various volumes of gelatin used in the various tests.

The first three tables of data (Tables 1 to 3) used the following slightly modified procedure. 250 ml graduated cylinders were used to hold the beer rather than the 7 oz. bottles. These containers were not sealed in an airtight fashion. Also, the turbidities were read on a National Turbidity Unit (N.T.U.) meter rather than an F.T.U. meter. The use of capped beer bottles and the F.T.U. meter are considered an improvement in the procedure. The F.T.U. meter is more sensitive and the samples can be read while still in the beer bottle. The N.T.U. meter requires that samples be poured into a separate container; this may disrupt the sediment. The F.T.U. meter has an upper limit of 800 units; therefore, samples that are more turbid than 800 are simply rated as 800+.

The various test beers were from several breweries and all of the tests included comparative tests with isinglass.

### Test Beer No. 1

Table 1 shows an abnormally high turbidity for the beer treated with isinglass. Consequently, the isinglass performance in this experiment was not considered reliable. However, other observations can be made. The 250 bloom gelatin performed better than the gelatin of 150 bloom. At 30 ppm, the 250 bloom gelatin produced lower turbidities than the 150 bloom gelatin at 40 ppm. The gellan gum formed viscous masses which remained in suspension. This was attributed to an overdosing of gellan gum (40 ppm). The gellan gum alone at 40 ppm is considered ineffective. The gelatin/gellan gum blends (50/50) clarified the beer to some degree at 40 ppm, but showed an insignificant improvement over the 250 bloom gelatin at 20 ppm.

**TABLE 1**

| **EFFECT OF FININGS ON RUH BEER NO. 1** | | | |
|---|---|---|---|
| Composition | Conc. (ppm) | Average Turbidity (N.T.U.) | |
| | | Day 3 | Day 5 |
| Untreated Control | --- | 300 | 100 |
| Isinglass | 20 | 95 | 38 |
| Gelatin, 150 blm. | 40 | 103 | 35 |
| Gelatin, 250 blm. | 40 | 77 | 27 |
| | 30 | 78 | 30 |
| | 20 | 115 | 38 |
| Gelatin (50%), 250 blm. + Gellan gum (50%) | 40 | 108 | 34 |
| Gellan gum | 40 | 220 | 88 |

### Test Beer No. 2

Table 2 shows that in smaller proportions (9% and 20% of the blend), the gellan gum seems to markedly enhance the fining action of the gelatin. The fining action was increased to a point where it rivals the performance of isinglass. The gellan gum alone at very low dosing rates was able to clarify the beer to a degree which was similar to that of the various gelatins at higher dosing rates. It also was observed that there appeared to be a synergistic effect between the gelatin and gellan gum as a precipitation mechanism.

**TABLE 2**

| **EFFECT OF FININGS ON RUH BEER NO. 2 (Yeast = 4.5x10⁶ cells/ml)** | | | |
|---|---|---|---|
| Composition | Conc. (ppm) | Turbidity (N.T.U.) | |
| | | Day 3 | Day 5 |
| Untreated Control | --- | 58 | 38 |
| Isinglass | 20 | 41 | 19 |
| Gelatin, 150 blm. | 40 | 58 | 28 |
| Gelatin, 250 blm. | 40 | 58 | 28 |
| | 30 | 62 | 26 |
| | 20 | 59 | 28 |
| Gelatin, 300 blm. | 40 | 52 | 24 |
| | 20 | 57 | 25 |
| Gellan Gum | 2 | 67 | 31 |
| | 5 | 43 | 24 |
| Gelatin (91%), 250 blm. + Gellan gum (9%) | 22 | 42 | 17 |
| Gelatin (80%), 250 blm. + Gellan gum (20%) | 25 | 28 | 17 |

### Test Beer No. 3

Table 3 shows that small additions (9% and 20% of the blend) of gellan gum to gelatin produced a fining action on the level of isinglass. The same pattern also was observed for the gellan gum alone as in Table 2. A synergistic effect between gellan gum and gelatin was also observed in this beer.

**TABLE 3**

| **EFFECT OF FININGS ON RUH BEER NO. 3 (Yeast = 2.73x10⁶ cells/ml)** | | | |
|---|---|---|---|
| Composition | Conc. (ppm) | Turbidity (N.T.U.) | |
| | | Day 3 | Day 5 |
| Untreated Control | --- | 60 | 30 |
| Isinglass | 20 | 25 | 7 |
| Gelatin, 150 blm. | 40 | 56 | 18 |
| Gelatin, 250 blm. | 40 | 39 | 18 |
| | 30 | 44 | 14 |
| | 20 | 48 | 20 |
| Gelatin, 300 blm. | 40 | 60 | 20 |
| | 20 | 44 | 14 |
| Gellan gum | 2 | 49 | 24 |
| | 5 | 33 | 13 |
| Gelatin (80%), 250 blm. + Gellan gum (20%) | 25 | 18 | 10 |
| Gelatin (91%), 250 blm. + Gellan gum (9%) | 22 | 23 | 7 |

### Test Beer No. 4

Table 4 shows that the turbidities obtained with pure gellan gum and compositions with gelatin which contained 20% or more gellan gum and addition rates of 20 ppm or less are similar to the turbidities of the untreated control. Solutions with 5% gellan gum/95% gelatin and 10% gellan gum/90% gelatin showed lower turbidities than the untreated control and various gelatins.

**TABLE 4**

| **EFFECT OF FININGS ON RUH BEER NO. 4** | | | |
|---|---|---|---|
| Composition | Conc. (ppm) | Average Turbidity (F.T.U.) | |
| | | Day 3 | Day 5 |
| Untreated Control | --- | +800 | +800 |
| Isinglass | 20 | 420 | 215 |
| Gelatin, 150 blm. | 40 | +800 | 440 |
| Gelatin, 250 blm. | 40 | 750 | 360 |
| 5% Gellan gum +95% Gelatin, 250 blm. | 40 | 450 | 295 |
| | 20 | 670 | 425 |
| 10% Gellan gum +90% Gelatin, 250 blm. | 20 | 700 | 425 |
| 20% Gellan gum +80% Gelatin, 250 blm. | 20 | +800 | +800 |
| 30% Gellan gum +70% Gelatin, 250 blm. | 10 | +800 | +800 |
| Gellan gum | 5 | +800 | +800 |
| | 3 | +800 | +800 |

### Test Beer No. 5

Table 5 shows that while the untreated beer remained turbid, the gellan gum/gelatin mixture at 80 ppm, with a large percentage of sodium citrate to aid solubilization of the blend, was comparable to the isinglass in the clarification of the beer. Low percentages of gellan gum were used in order to gain full solubility of the blended product with the help of sodium citrate.

**TABLE 5**

| **EFFECT OF FININGS ON RUH BEER NO. 5 (Yeast = 10.19 x 10⁶ cells/ml)** | | | | |
|---|---|---|---|---|
| Composition | Conc. (ppm) | Average Turbidity (F.T.U.) | | |
| | | Day 1 | Day 2 | Day 3 |
| Untreated Control | --- | 580 | 608 | 694 |
| Isinglass | 20 | 239 | 300 | 328 |
| | 40 | 240 | 194 | 240 |
| Gelatin, 150 blm. | 20 | 496 | 487 | 523 |
| | 40 | 440 | 375 | 380 |
| 2.5% Gellan gum 47.5% Gelatin (250 blm.) 50% Sodium Citrate | 40 | 432 | 391 | 478 |
| | 80 | 369 | 259 | 270 |

### Test Beer No. 6

Table 6 data shows a pattern of increased efficiency with increased additions of the blends tested. While the 150 bloom gelatin was not effective at the concentrations tested at high yeast cell concentrations, the higher additions of 5% Gellan gum/45% 250 blm. pork gelatin (with 50% sodium citrate) were rather effective. The calf gelatin did not show an extreme difference in clarification ability in comparison to pork gelatin.

**TABLE 6**

| **EFFECT OF FININGS ON RUH BEER NO. 6 (Yeast = 18.6 x 10⁶ cells/ml)** | | | |
|---|---|---|---|
| Composition | Conc. (ppm) | Average Turbidity (F.T.U.) | |
| | | 2 Days | 3 Days |
| Untreated Control | 0 | 800+ | 488 |
| Gelatin 150 blm. | 20 | 800+ | 506 |
| | 40 | 800+ | 483 |
| 5% Gellan Gum, 45% Gelatin (calf, 250 blm.), 50% Sodium Citrate | 40 | 616 | 463 |
| | 80 | 500 | 361 |
| | 120 | 401 | 303 |
| 5% Gellan Gum, 45% Gelatin (pork, 250 blm.), 50% Sodium Citrate | 40 | 608 | 353 |
| | 80 | 495 | 315 |
| | 120 | 321 | 270 |

### Test Beer No. 7

Table 7 shows that after four days in storage, the 5% gellan gum/45% gelatin blend with 50% sodium citrate clarified the beer the quickest and produced the clearest beer. When tetrasodium pyrophosphate was used to aid in the solubilization of the blend, positive results are also obtained.

**TABLE 7**

| **EFFECT OF FININGS ON RUH BEER NO. 7 (Yeast = 0.24 x 10⁶ cells/ml)** | | | | | | |
|---|---|---|---|---|---|---|
| Composition | Conc. (ppm) | Average Turbidity (F.T.U.) | | | | |
| | | 1 Day | 2 Day | 3 Day | 4 Day | 7 Day |
| 5% Gellan gum 45% Gelatin 50% Sodium Citrate | 40 | 459 | 209 | 160 | 136 | 116 |
| | 80 | 311 | 174 | 151 | 127 | 102 |
| | 120 | 274 | 164 | 128 | 113 | 92 |
| Isinglass | 10 | 800+ | 404 | 306 | 223 | 122 |
| | 20 | 498 | 222 | 201 | 160 | 107 |
| | 40 | 279 | 178 | 146 | 111 | 85 |
| Gelatin 150 blm. | 40 | 553 | 264 | 184 | 162 | 114 |
| | 60 | 504 | 229 | 147 | 139 | 98 |
| 5% Gellan gum 45% Gelatin 50% Tetrasodium Pyrophosphate | 40 | 710 | 279 | 213 | 177 | 121 |
| | 80 | 461 | 265 | 213 | 177 | 119 |
| | 120 | 346 | 234 | 189 | 150 | 117 |
| Control | --- | 800+ | 800+ | 645 | 560 | 294 |

### Test Beer No. 8

Table 8 shows that isinglass was the most effective fining agent in this beer after 4 days. The 8% gellan gum/20% sodium citrate/72% gelatin blend was not dependent on H₂0 temperature, even if complete solubility of the blend was not achieved. Gelatin alone did not exhibit very good fining ability under these particular conditions. If a preserving agent such as potassium metabisulfite (KMS) is used at 5% by weight, it does not inhibit the product's performance.

**TABLE 8**

| **EFFECT OF FININGS ON RUH BEER NO. 8 (Yeast = 10.0 x 10⁶ cells/ml)** | | | | | |
|---|---|---|---|---|---|
| Composition | Conc. (ppm) | Average Turbidity (F.T.U.) | | | |
| | | 1 Day | 2 Day | 3 Day | 4 Day |
| Isinglass | 10 | 554 | 446 | 349 | 342 |
| | 20 | 353 | 273 | 212 | 208 |
| | 30 | 347 | 285 | 236 | 197 |
| | 40 | 253 | 210 | 187 | 167 |
| Gelatin 150 blm. | 20 | 610 | 441 | 324 | 302 |
| | 40 | 624 | 412 | 317 | 316 |
| | 60 | 661 | 376 | 290 | 272 |
| Control | --- | 698 | 436 | 340 | 330 |
| 72% Gelatin 20% Sodium citrate 8% Gellan gum (hot water) | 20 | 644 | 467 | 300 | 293 |
| | 40 | 429 | 340 | 288 | 245 |
| | 60 | 449 | 314 | 260 | 240 |
| 72% Gelatin 20% Sodium citrate 8% Gellan gum (cold water) | 20 | 514 | 404 | 318 | 301 |
| | 40 | 461 | 336 | 268 | 247 |
| | 60 | 399 | 328 | 251 | 229 |
| 68% Gelatin 20% Sodium citrate 7% Gellan gum 5% KMS | 20 | 508 | 396 | 272 | 277 |
| | 40 | 428 | 329 | 241 | 262 |
| | 60 | 452 | 313 | 229 | 220 |
| 5% Gellan gum 45% Gelatin 50% Sodium Citrate | 40 | 541 | 373 | 322 | 268 |
| | 80 | 489 | 347 | 305 | 281 |
| | 120 | 419 | 299 | 264 | 253 |

Table 8A shows the analysis of sediments of the finings in Table 8. The blend with KMS exhibits optimum results with the others exhibiting various effectiveness.

**TABLE 8A**

| **SEDIMENT DESCRIPTION** | |
|---|---|
| Composition | Visual Sediment Description |
| Isinglass | -Tight |
| | -Easily agitated |
| Gelatin 150 blm. | -Tight |
| | -Agitatable |
| | -Some loose material |
| Control | -Tight |
| | -Easily agitated |
| | -Very little sediment (Volume) |
| 72% Gelatin 20% Sodium Citrate 8% Gellan gum (hot water) | -Somewhat tight |
| | -Agitatable |
| 72% Gelatin 20% Sodium Citrate 8% Gellan gum (cold water) | -Tight initial sediment |
| | -Very loose subsequent sediment |
| | -Easily agitated |
| 68% Gelatin 20% Sodium Citrate 7% Gellan gum 5% KMS | -Very tight |
| | -Not easily agitated |
| 45% Gelatin 5% Gellan gum 50% Sodium Citrate | -Tight initial sediment |
| | -Very loose subsequent sediment |
| | -Easily agitated |

### Test Beer No. 9

Table 9 shows that due to an excessively high concentration of yeast in the ruh beer, all the products took longer than normal to show signs of clarification. The gellan gum/gelatin/sodium citrate blend at the common use rate of 40 ppm performed better than isinglass at the normal use rate of 20 ppm. Also, the gellan gum/gelatin/sodium citrate blend performed similar to isinglass at a high use rate of 30 ppm.

**TABLE 9**

| **EFFECT OF FININGS ON RUH BEER NO. 9 (Yeast = 36.9x10⁶ cells/ml)** | | | | | | | | | | |
|---|---|---|---|---|---|---|---|---|---|---|
| Comp. | Conc. (ppm) | Average Turbidity (F.T.U.) | | | | | | | | |
| | | Day 1 | Day 2 | Day 3 | Day 4 | Day 5 | Day 6 | Day 7 | Day 8 | Day 9 |
| 72% Gelatin 20% Sodium Citrate 8% Gellan gum | 40 | 800+ | 800+ | 800+ | 686 | 800+ | 698 | 616 | 543 | 480 |
| | 60 | 800+ | 800+ | 626 | 606 | 708 | 613 | 590 | 463 | 415 |
| Gelatin 150 blm. | 40 | 800+ | 800+ | 800+ | 800+ | 800+ | 800+ | 800+ | 558 | 506 |
| | 60 | 800+ | 800+ | 800+ | 800+ | 800+ | 800+ | 800+ | 591 | 529 |
| Control | --- | 800+ | 800+ | 800+ | 800+ | 800+ | 800+ | 800+ | 800+ | 665 |
| Isinglass | 10 | 800+ | 800+ | 800+ | 800+ | 800+ | 800+ | 800+ | 800+ | 691 |
| | 20 | 800+ | 800+ | 800+ | 800+ | 800+ | 800+ | 617 | 688 | 604 |
| | 30 | 724 | 710 | 507 | 563 | 645 | 630 | 513 | 502 | 468 |

### Test Beer No. 10

Table 10 shows that the 8% gellan gum/20% sodium citrate/72% gelatin production blend performed slightly better than the 8% gellan gum/20% sodium citrate/72% gelatin laboratory blend. The isinglass clarified the beer the best.

**TABLE 10**

| **EFFECT OF FININGS ON RUH BEER NO. 10 (Yeast = 7.6x10⁶ cells/ml)** | | | | | | | |
|---|---|---|---|---|---|---|---|
| Comp. | Conc. (ppm) | Average Turbidity (F.T.U.) | | | | | |
| | | Day 1 | Day 2 | Day 3 | Day 4 | Day 5 | Day 6 |
| Control | --- | 800+ | 612 | 407 | 383 | 354 | 304 |
| Isinglass | 10 | 534 | 381 | 324 | 287 | 271 | 249 |
| | 20 | 396 | 285 | 241 | 222 | 218 | 203 |
| | 30 | 313 | 248 | 214 | 205 | 199 | 193 |
| 8% Gellan Gum 20% Sodium Citrate 72% Gelatin (Production Blend) | 20 | 800+ | 551 | 405 | 365 | 331 | 284 |
| | 40 | 800+ | 426 | 332 | 295 | 277 | 240 |
| | 60 | 662 | 394 | 307 | 281 | 270 | 236 |
| 8% Gellan Gum 20% Sodium Citrate 72% Gelatin (Lab Blend) | 20 | 800+ | 572 | 419 | 367 | 323 | 288 |
| | 40 | 800+ | 441 | 342 | 326 | 294 | 258 |
| | 60 | 527 | 393 | 317 | 284 | 269 | 237 |

### Test Beer No. 11

Table 11 shows the results of the comparison of agitated and non-agitated gellan gum/gelatin/sodium citrate blends at 40 ppm. The non-agitated blend clarified the beer almost as well as the agitated blend. The results suggest that the use of the blends in a unitank operation, where adequate mixing during tank fill is not possible, is feasible.

**TABLE 11**

| **EFFECT OF FININGS ON RUH BEER NO. 11 (Yeast = 7.6x10⁶ cells/ml)** | | | | | | | |
|---|---|---|---|---|---|---|---|
| Comp. | Conc. (ppm) | Average Turbidity (F.T.U.) | | | | | |
| | | Day 1 | Day 2 | Day 3 | Day 4 | Day 5 | Day 6 |
| Control | --- | 800+ | 612 | 407 | 383 | 354 | 304 |
| Isinglass | 10 | 534 | 381 | 324 | 287 | 271 | 249 |
| | 20 | 396 | 285 | 241 | 222 | 218 | 203 |
| | 30 | 313 | 248 | 214 | 205 | 199 | 193 |
| 8% Gellan Gum 20% Sodium Citrate 72% Gelatin | 20 | 800+ | 551 | 405 | 365 | 331 | 284 |
| | 40 | 800+ | 426 | 332 | 295 | 277 | 240 |
| | 60 | 662 | 394 | 307 | 281 | 270 | 236 |
| 8% Gellan Gum 20% Sodium Citrate 72% Gelatin (non-agitated) | 40 | 800+ | 426 | 373 | 341 | 296 | 254 |

### Test Beer No. 12

Table 12 shows that the additions tested (2.5% and 5.0% of the blend) of gellan gum in the gellan gum/gelatin blend (in this case, with 20% sodium citrate) fines the ruh beer better than gelatin alone and the gellan gum alone, thus demonstrating the synergistic effect of the blend. Gellan gum alone did not fine the ruh beer (at any concentration tested), in fact it increased its turbidity (when compared to the control). Also seen is the effectiveness of the gellan gum/gelatin/sodium citrate blend as a fining agent in this beer (similar to the isinglass).

**TABLE 12**

| **EFFECT OF FININGS ON RUH BEER NO. 12 (Yeast = 5.725 x 10⁶ cells/ml)** | | | | | | | |
|---|---|---|---|---|---|---|---|
| Comp. | Conc. (ppm) | Average Turbidity (F.T.U.) | | | | | |
| | | Day 1 | Day 2 | Day 3 | Day 4 | Day 5 | Day 6 |
| Control | --- | 800+ | 800+ | 800+ | 800+ | 800+ | 720 |
| Isinglass | 10 | 632 | 558 | 430 | 341 | 314 | 286 |
| | 20 | 375 | 308 | 256 | 212 | 202 | 195 |
| | 30 | 597 | 488 | 365 | 286 | 258 | 240 |
| Gelatin 150 blm. | 30 | 800+ | 800+ | 800+ | 800+ | 800+ | 708 |
| | 50 | 800+ | 800+ | 800+ | 800+ | 800+ | 629 |
| Gelatin 250 blm. | 30 | 800+ | 800+ | 800+ | 687 | 663 | 554 |
| | 50 | 800+ | 720 | 552 | 427 | 419 | 346 |
| 2.5 % Gellan gum 77.5 % Gelatin 20% Sodium Citrate | 30 | 800+ | 753 | 582 | 489 | 450 | 394 |
| | 50 | 800+ | 488 | 360 | 301 | 292 | 252 |
| 5% Gellan gum 75% Gelatin 20% Sodium Citrate | 30 | 800+ | 733 | 580 | 497 | 475 | 397 |
| | 50 | 800+ | 560 | 456 | 362 | 333 | 316 |
| 100% Gellan gum | 5 | 800+ | 800+ | 800+ | 800+ | 800+ | 800+ |
| | 10 | 800+ | 800+ | 800+ | 800+ | 800+ | 800+ |
| | 15 | 800+ | 800+ | 800+ | 800+ | 800+ | 800+ |
| | 20 | 800+ | 800+ | 800+ | 800+ | 800+ | 800+ |
| | 30 | 800+ | 800+ | 800+ | 800+ | 800+ | 800+ |

**TABLE 13**

| **VARIOUS RATIOS OF THE MATERIALS USED IN THE TESTS** | | | |
|---|---|---|---|
| Gellan Gum | Gelatin | Sodium Citrate | See Table |
| 50% | 50% | --- | 1 |
| --- | 100% | --- | 1, 2, 3, 4, 5, 6, 7, 8, 9 and 12 |
| 100% | --- | --- | 1, 2, 3, 4 and 12 |
| 9% | 91% | --- | 2 and 3 |
| 20% | 80% | --- | 2, 3, and 4 |
| 5% | 95% | --- | 4 |
| 10% | 90% | --- | 4 |
| 30% | 70% | --- | 4 |
| 2.5% | 47.5% | 50% | 5 |
| 5% | 45% | 50% | 6, 7 and 8 |
| 5% | 45% | 50%* | 7 |
| 8% | 72% | 20% | 8, 9, 10 and 11 |
| 5% | 75% | 20% | 12 |
| 2.5% | 77.5% | 20% | 12 |

| | | | |
|---|---|---|---|
| * 50% of Tetrasodium Pyrophosphate was used in place of Sodium Citrate as a sequestrant. | | | |

**TABLE 14**

| **VARIOUS BLOOMS OF GELATIN USED IN THE TEST** | | |
|---|---|---|
| Gelatin | Bloom | See Table |
| 100% | 150 | 1, 2, 3, 4, 5, 6, 7, 8, 9 and 12 |
| 100% | 250 | 1, 2, 3, 4 and 12 |
| 100% | 300 | 2 and 3 |

It will be apparent to those skilled in the art that a number of modifications and changes can be made without departing from the spirit and scope of the present invention. Therefore, it is intended that the invention only be limited by the claims.

## Claims

1. A method of removing fines from beer in the brewing process, said method comprising:
(a) preparing an aqueous solution of a blend comprising by weight about 2.5 % to about 50 % gellan gum and about 45 % to about 95 % gelatin;
(b) adding an amount of said solution to a ruh beer to obtain a concentration of gellan gum of about 0.25 to about 60 ppm and a concentration of gelatin of about 4.5 to about 115 ppm;
(c) storing the thus treated ruh beer for at least about 24 hrs; and
(d) then decanting and filtering said ruh beer.

2. A method of claim 1 in which a sequestering agent is added to the aqueous solution.

3. A method of claim 2 in which the sequestering agent is sodium citrate.

4. A method of claim 2 in which the sequestering agent is tetrasodium pyrophosphate.

5. A method of one of claims 1 to 4 in which the gelatin is 250 bloom gelatin.

6. A fining agent for use in a ruh beer comprising:
(a) about 2.5 % to about 50 % by weight of gellan gum; and
(b) about 45 % to about 95 % by weight of gelatin.

7. A fining agent of claim 6 which also contains an effective amount of a sequestering agent to combine with any metallic ions that might be present in the ruh beer and might interfere with the desired action of the gellan gum and gelatin.

8. A fining agent of claim 7 in which the sequestering agent is sodium citrate.

9. A fining agent of claim 7 in which the sequestering agent is tetrasodium pyrophosphate.

10. A fining agent of one of claims 6 to 9 in which the gelatin is 250 bloom gelatin.
